# FASCICULE DE BREVET EUROPEEN

(11) **EP 2 053 784 B1**
(45) Date de publication et mention de la délivrance du brevet: **26.06.2013**
(21) Numéro de dépôt: 08167347.7
(22) Date de dépôt: 23.10.2008
(51) Int. Cl.: H04L 12/24, H04L 29/06

(54) **Procédé de mise à jour de paramètres de réseau et dispositif de mise en oeuvre dudit procédé**
Aktualisierungsverfahren von Netzparametern und Vorrichtung zum Durchführen dieses Verfahrens
Method of updating network settings and device for implementing said method

(30) Priorité: 26.10.2007 FR 0758610
(43) Date de publication de la demande: 29.04.2009
(73) Titulaire: Société Française du Radiotéléphone, 75008 Paris (FR)
(72) Inventeur: TEIMOORZADEH, Kourosh, 28130, BOUGLAINVAL (FR)
(74) Mandataire: Schmit, Christian Norbert Marie

(56) Documents cités:
- WO-A-03/026255
- US-A1- 2005 172 029
- US-A1- 2006 193 321
- US-B1- 6 314 088

## Description

### Domaine de l'invention

La présente invention a pour objet un procédé de mise à jour de paramètres d'un réseau. Plus particulièrement, la présente invention a pour objet un procédé de mise à jour en temps réel et cas par cas des paramètres de routage et de filtrage des dispositifs d'un réseau de télécommunication fixe et mobile. Le domaine de l'invention est celui des réseaux télématiques. Plus particulièrement, le domaine de l'invention est celui de la gestion du traitement des flux et le paramétrage des dispositifs du réseau intervenant dans le routage et dans le filtrage des flux. La présente invention concerne également un dispositif mettant en oeuvre un tel procédé de mise à jour.

Un but de l'invention est d'effectuer une gestion simplifiée et centralisée des paramètres des différents équipements du réseau au niveau de l'opérateur à l'aide d'un dispositif dédié.

Un autre but de l'invention est de simplifier les procédures de mise en production des gestions des flux : routage, filtrage, protection.

Un autre but de l'invention est d'automatiser les tâches liées à la mise en oeuvre et à l'exploitation des dispositifs de sécurité du réseau intervenant dans le cloisonnement et le filtrage des différents flux.

### Etat de la technique

Sur le plan fonctionnel, un réseau de télécommunication fixe ou mobile comprend trois composants majeurs : un transporteur correspondant aux moyens de transport des données, un contenant correspondant aux plates-formes de services et un contenu correspondant aux applications.

Les moyens de transport correspondent à un ensemble de dispositifs reliés les uns aux autres afin de constituer un réseau de communication. Le rôle de ce réseau de communication consiste à transporter les différents flux de données en provenance et à destination des utilisateurs. Les dispositifs du réseau correspondent notamment à des routeurs, firewall, switch. La liste n'est pas exhaustive.

Dans ce contexte, la notion du « contenant » englobe l'ensemble des infrastructures qui hébergent les différentes plates-formes d'applications représentant deux catégories distinctes :
- applications intermédiaires et/ou facilitateurs (connues sous le nom de « Enabler » : Radius, DHCP, GID, LDAP, ...etc.) ;
- applications finales représentant les différents services et offres des opérateurs (exemple : WAP, MMS, SMSC, ...etc.).

Ainsi, les interactions multiples entre les différents composants des infrastructures d'un opérateur de télécommunication représentent « son réseau » dans son ensemble. Où ces interactions sont basées sur des couches protocolaires dédiées permettant les échanges d'informations entre les différents équipements du réseau. Certain de ces couches protocolaires sont dédiées au routage des données tandis que d'autres sont dédiées au cloisonnement, au filtrage et à la protection des différent flux de données.

Dans ce schéma, les protocoles de routage/transport et de filtrage permettent d'une manière générale l'organisation des échanges d'informations entre deux appareils communiquant via un réseau. Cela en déterminant les formats et les agencements particuliers des données et surtout le cloisonnement des flux d'informations à travers les infrastructures de l'opérateur.

Aujourd'hui, les infrastructures des opérateurs fixes et mobiles sont basées sur les modalités d'interactions physique et logique des différents équipements connectés les uns aux autres. Dan cette optique, la fiabilité et l'efficacité d'un opérateur sont déterminées en fonction de sa méthodologie d'organisation (topologie) et de la gestion pertinente des flux en termes de routage et de filtrage.

La notion de routage correspond au paramétrage des différents équipements du réseau intervenant dans l'acheminement efficace des données. La notion de filtrage, quant à elle, permet de garantir l'étanchéité et la protection des différents flux de données acheminés par les équipements du réseau de l'opérateur. Le cloisonnement des flux permet entre autre de garantir la disponibilité, l'intégrité et la confidentialité des données des utilisateurs et les infrastructures de l'opérateur.

Par conséquent, les contraintes techniques liées au maintien et à la mise à jour des différents paramètres du réseau sont déterminés en fonction de la complexité des infrastructures d'un opérateur et de la sensibilité des données transportées. C'est la raison pour laquelle, la gestion efficace du paramétrage des infrastructures du réseau représente le coeur de l'activité d'un opérateur.

Les paramètres du réseau correspondent au moins à un ensemble de règles dont l'évaluation permet au moins le cloisonnement des flux et le cloisonnement applicatif. Les paramètres du réseau sont notamment des paramètres de routage, sécurité ou filtrage.

La gestion de ces paramètres du réseau représente des contraintes techniques non négligeables pour l'opérateur. En effet, la richesse et la complexité des services de plus en plus innovants ayant surtout des problématiques de qualité de service (ou Quality of Service en anglais) et de sécurité représente des difficultés non négligeables pour les opérateurs. Par conséquent, afin de garantir la fiabilité de ses services l'opérateur se concentre à la fois sur la gestion des paramètres des dispositifs actifs et sur la maîtrise de bout en bout de leur architecture matérielle et logicielle du réseau.

Dans cette optique, l'une des contraintes majeures à prendre en compte pour la gestion des paramètres du réseau concerne la gestion efficace et sur mesure des ressources réseau telle que les adresses IP. A ce jour, la gestion d'affectation des adresses IP est basée sur deux principes. Un des principes est l'attribution statique des adresses IP. Cette attribution statique est utilisée pour des infrastructures figées du réseau. Un autre des principes est l'attribution dynamique des adresses IP. Cette attribution dynamique est utilisée pour la gestion optimale des connexions à distance des utilisateurs au réseau de l'opérateur.

Un exemple d'un system de gestion des paramètres de réseaux est décrit dans le document US 6314088.

Actuellement, au niveau de l'attribution statique, pour chaque combinaison de services donnée de l'opérateur est affectée de manière statique une plage d'adresses IP. Cette plage d'adresses IP est souvent continue. Un service de l'opérateur peut être notamment de la voix sur IP, (VoIP), de la messagerie électronique, email, tel que notamment SMTP, POP, IMAP, des messages courts, des messages multimédia, de la diffusion audio/vidéo. La liste n'est pas exhaustive.

A ce jour, presque tous les opérateurs utilisent l'affectation dynamique des adresses IP afin de permettre à leurs utilisateurs de se connecter au réseau de l'opérateur. Cette affectation dynamique nécessite la planification au préalable du réseau afin de mettre en adéquation le paramétrage des routes (acheminement, redirection, basculement ...) et le traitement des flux liés à la sécurité des informations (filtrage, cloisonnement des flux, gestion d'identification et d'authentification, traçabilité ...).

En conséquence, l'ouverture de chaque nouveau flux nécessite l'attribution d'une ou de plusieurs plage (s) d'adresses IP. Cette attribution est suivie par le paramétrage des nouvelles routes et des nouveaux filtres dans tous les dispositifs participant à l'acheminement de ce nouveau flux dans le réseau.

Ainsi à chaque plage d'adresse IP est associée une nouvelle série de paramètre de routage et de sécurité dans la mesure où la mise en oeuvre des paramètres de sécurité dépend du type de flux, du numéro de port (UDP/TCP) et des adresses IP des sources et des destinations. Mais, cette planification à priori des paramètres de réseau représente un frein non négligeable au développement et au maintien des nouveaux services réseau. En effet, les nouveaux services (ex. convergeant) nécessitent des interactions multiples et « sans frontières » entre les utilisateurs et les services diverses et variés proposés par les opérateurs et/ou les utilisateurs eux mêmes. Or, les moyens techniques et les procédures de paramétrage des infrastructures sont de plus en plus inadaptés aux exigences du marché et aux demandes des utilisateurs qui peuvent être notamment la convergence fixe/mobile, le poste à poste ou P2P, les Réseaux de Mesh communautaires, les multiservices et mono-contrat, la télévision sur IP ou IPTV pour Internet Protocol Television en anglais, la domotique.

L'attribution d'une ou de plusieurs plage (s) d'adresses IP et le paramétrage des nouvelles routes et des nouveaux filtres sont effectués manuellement sur chaque dispositif du réseau. Ainsi, la mise à jour d'informations, telles que les paramètres du réseau, relatives aux plages d'adresses IP représentent une lourde tâche pour l'opérateur. En outre, avec ce type d'attribution des adresses IP, il est nécessaire de planifier des audits et le nettoyage des adresses IP du réseau.

Du fait de la gestion manuelle de l'attribution statique des plages d'adresses IP et de la configuration des dispositifs, les paramètres du réseau ne sont mis à jour qu'en temps différé et de manière globale.

L'augmentation du nombre de services et des dispositifs du réseau accroît de manière exponentielle la complexité de la gestion des adresses IP. En effet, l'attribution de plusieurs adresses IP à chaque nouveau service n'est pas très facile à effectuer sans gaspiller des adresses IP et sans compliquer le routage.

De même, l'augmentation du nombre de services et des dispositifs du réseau augmente de manière exponentielle la complexité des mises à jour des paramètres du réseau. En effet, les mises à jour des paramètres du réseau nécessitent une planification opérationnelle sur tout le réseau. La mise à jour est faîte de manière globale sur tout le réseau.

Cette complexité de l'affectation des adresses IP et des mises à jour des paramètres du réseau (routage, filtrage, ...) augmentent le coût de l'exploitation du réseau. De plus, du fait de l'importante intervention humaine requise, la marge d'erreur est très importante.

Une autre contrainte majeure à prendre en compte pour la gestion des paramètres du réseau concerne la coexistence des infrastructures traditionnelles avec celles basées sur les réseaux de nouvelles générations (en anglais next generation networks) tels que notamment le WiMAX, IMS, la voix sur IP. Or ces types d'infrastructures sont incompatibles. Cette incompatibilité est due à des contraintes techniques divergentes entre ces types d'infrastructures (protocoles, richesse fonctionnelle, ...). Cette incompatibilité contribue à la complexité de la gestion actuelle des paramètres du réseau. Il faut en effet maintenir des passerelles entre les différentes technologies.

En outre avec ces réseaux de nouvelles générations, les fournisseurs de même matériel et de même logiciel pour le même service utilisent des implémentations protocolaires différentes. Ainsi, en terme opérationnel, il est difficile d'avoir un protocole standardisé de bout en bout. La non standardisation des implémentations protocolaires pose un problème à l'opérateur, lors de la gestion des paramètres du réseau.

Une autre contrainte majeure à prendre en compte pour la gestion des paramètres du réseau est qu'aujourd'hui, les opérateurs externalisent certains de leurs services, non critiques, à des prestataires de services. Cette externalisation (ou outsourcing en anglais) a pour but, d'une part, de faire face à des contraintes liées au développement de services et, d'autre part, d'optimiser les coûts élevés d'exploitation d'un réseau. Cette externalisation permet à l'opérateur de faire passer les coûts d'infrastructures en coûts d'exploitation.

Toutefois, lors de cette externalisation, des problèmes notamment de définition du service, de conception, de développement, d'implémentation physique et d'exploitation du service doivent être résolus par le prestataire de services. Lors de cette résolution, le prestataire de services met en oeuvre des solutions réseaux de transport/routage différentes de celles de l'opérateur. Cette hétérogénéité des réseaux est un autre problème que l'opérateur doit prendre en compte lors de la gestion des paramètres du réseau.

Cette externalisation des services entraîne également une diminution de la maîtrise des informations et donc un risque accru de perte de la confidentialité d'informations sensibles.

Il est ainsi difficile d'avoir actuellement une vision de bout en bout d'un réseau de télécommunication fixe ou mobile. En effet, les différents acteurs d'un réseau télématique utilisent notamment des architectures, des protocoles et des services différents.

Une autre contrainte majeure à prendre en compte est que les opérateurs, considérant qu'ils ne peuvent pas tout gérer, ont exporté certaines de leurs opérations autrefois centralisées vers leurs clients. Cette exportation a principalement pour but d'alléger les coûts des opérateurs. Toutefois, la problématique de sécurité est également exportée chez leurs clients utilisateurs. En effet, l'utilisateur doit être protégé contre les agressions externes et internes des autres utilisateurs et de l'opérateur. La décentralisation de certaines opérations vers l'utilisateur soulève un problème de sécurité qui doit être pris en compte, lors de la gestion des paramètres du réseau.

Une autre des contraintes majeures à prendre en compte pour la gestion des paramètres du réseau est la complexité grandissante des infrastructures des opérateurs. Cette complexité est due d'une part à la dématérialisation des frontières physiques du réseau. Elle est due d'autre part à la virtualisation des données. La virtualisation des données est un moyen de mise en commun des ressources nécessaires pour la gestion (formatage, protection, stockage, ...) des données provenant de systèmes différents, de type de base de données différents et de formats différents.

Cette complexité des infrastructures est accrue par le nombre grandissant des chaînes de production multi-usage tel que les opérateurs de réseau mobile virtuel, également connu sous le sigle MVNO en anglais (Mobile Virtual Network Operators).

Dans l'état de la technique, la gestion des paramètres du réseau est globale pour tous les utilisateurs de l'opérateur. Avec ce type de gestion, l'affectation dynamique d'une adresse IP à un utilisateur par rapport à une plage d'adresses IP statiques ne peut être déclenchée que lorsque cet utilisateur est identifié, connecté et ses services connus. Ce type de gestion associée avec la complexité des éléments à prendre en compte conduit à un paramétrage approximatif du réseau pour un utilisateur.

Ainsi, actuellement, la gestion au quotidien des paramètres du réseau chez un opérateur de téléphonie mobile est très couteuse en temps et financièrement sans pour autant être optimale.

### Exposé de l'invention

L'invention a justement pour but de remédier aux inconvénients des techniques exposées précédemment. Pour cela, l'invention propose un procédé de mise à jour en temps réel et cas par cas des paramètres de traitement de paquets de données dans des dispositifs de transport d'un réseau télématique. Pour ce faire, l'invention propose de centraliser la gestion des mises à jour des paramètres du réseau à l'aide d'un dispositif dédié. Ce dispositif dédié peut être un dispositif du réseau existant, tel qu'un serveur du réseau, auquel on ajoute le procédé de gestion des paramètres du réseau de l'invention. Il peut être également un nouveau dispositif rajouté au réseau.

Dans l'invention, l'affectation des adresses IP à un flux est effectuée de manière dynamique ou statique par rapport à l'utilisateur et non en plage par rapport à une combinaison de services comme dans l'état de la technique. Cette affectation par rapport à l'utilisateur permet de simplifier la gestion des adresses IP.

La gestion des paramètres du réseau est effectuée pour chaque adresse IP allouée à l'utilisateur. Ainsi, le réseau n'est plus paramétré de manière globale comme dans l'état de la technique, mais il est paramétré en particulier pour chaque utilisateur.

Le principe de fonctionnement de l'invention est le suivant. L'utilisateur (client de l'opérateur) est identifié par le réseau de l'opérateur via un identifiant de l'utilisateur qui peut éventuellement être stocké sur une carte d'identification de type module d'identification de l'abonné plus connu sous le nom anglais de SIM (pour Subscriber Identity Module). A cette carte est associé un profil de l'utilisateur stocké dans une base de données d'abonnés du réseau. Lors d'une requête de connexion de l'utilisateur à un service de l'opérateur (via un média d'accès mobile et/ou fixe), il est attribué à l'utilisateur de manière dynamique ou statique une adresse IP. Cette attribution est une mise à jour du profil.

Avant l'autorisation de connexion sur le réseau, le procédé de gestion des paramètres du réseau de l'invention vérifie en permanence si une condition de mise à jour est détectée via la base de données d'abonnés. Une condition de mise à jour peut être notamment un changement de profil de l'utilisateur. Dès que cette condition est validée, le procédé de gestion des paramètres du réseau met en oeuvre un algorithme de topographie apte à déterminer les dispositifs du réseau à configurer, à partir de l'identifiant de l'utilisateur et des services associés à cet identifiant.

Le procédé de l'invention met en oeuvre un algorithme de production d'au moins un message de configuration dans un format standard. Ce message est transmis à chaque dispositif déterminé soit tel quel, soit selon une syntaxe propre au dispositif. Chaque dispositif se paramètre en fonction des messages reçus. Ainsi, grâce à une gestion auto-adaptative des paramètres du réseau, les dispositifs de transport dudit réseau sont configurés dynamiquement. Après cette configuration, la connexion de l'utilisateur au service demandé est autorisée.

Grâce à cette invention, la politique de sécurité de l'opérateur est prise en compte dès la demande de connexion de l'utilisateur. C'est en fonction du profil de l'utilisateur que les différents dispositifs du réseau vont être automatiquement configurés. Par conséquent, à chaque fois que l'utilisateur se connecte et cela quelque soit le média et le lieu d'accès, grâce à son profil, il bénéficiera d'un accès sécurisé et sélectif aux données et aux services auxquelles il a droit et pas plus.

Le procédé de l'invention permet ainsi à l'opérateur de réaliser un contrôle personnalisé, des paramètres de routage et de filtrage de chaque utilisateur, en fonction de son profil. Ce type de contrôle personnalisé permet aux opérateurs de s'affranchir du type actuel de contrôle global, des paramètres de routage et de filtrage des utilisateurs, en fonction des adresses IP.

L'invention a donc pour objet un procédé de mise à jour sélective des paramètres du réseau et de traitement de paquets de données dans des dispositifs de transport d'un réseau télématique caractérisé en ce que la mise à jour sélective des paramètres du réseau est individualisée pour un poste utilisateur donné selon les étapes suivantes mises en oeuvre par un serveur de paramétrage du réseau :
- association dans une mémoire de paramétrage du serveur de paramétrage du réseau d'au moins un paramètre à au moins un profil de l'utilisateur,
- requête de connexion de l'utilisateur au réseau,
- avant l'autorisation de connexion, évaluation d'une condition de mise à jour des paramètres du réseau,
- en cas d'évaluation positive :
   - détermination des dispositifs du réseau à mettre à jour en fonction de la condition de mise à jour,
   - production de messages de configuration pour les dispositifs déterminés,
   - émission (des messages de configuration produits,
   - réception et prise en compte des messages émis par les dispositifs destinataires.

Avantageusement l'invention est aussi caractérisée en ce que la condition de mise à jour est une modification du profil de l'utilisateur dans la mémoire de paramétrage, cette modification étant effectuée par un utilisateur ou un administrateur du réseau.

Avantageusement l'invention est aussi caractérisée en ce que la condition de mise à jour est une modification du profil de l'utilisateur dans la mémoire de paramétrage, cette modification étant exécutée par le serveur en fonction du résultat d'une analyse statistique d'un profil des historiques de connexions d'un utilisateur du réseau.

Avantageusement l'invention est aussi caractérisée en ce que
- le profil des historiques de connexions de l'utilisateur est transféré dans un ordinateur d'un administrateur du réseau,
- exécution de ce profil dans cet ordinateur,
- détection d'éventuelles anomalies de connexions de l'utilisateur sur le réseau.

Avantageusement l'invention est aussi caractérisée en ce que la condition de mise à jour est une modification du profil de l'utilisateur dans la mémoire de paramétrage, cette modification étant exécutée par le serveur en fonction d'un changement d'une adresse IP du profil de l'utilisateur.

Avantageusement l'invention est aussi caractérisée en ce que la condition de mise à jour est une planification temporelle d'une mise à jour des paramètres du réseau.

Avantageusement l'invention est aussi caractérisée en ce que la détermination des dispositifs du réseau comporte les étapes suivantes:
- détermination de la partie de la mémoire de paramétrage concernée par la mise à jour en fonction de la condition de mise à jour,
- production d'une liste des identifiant/adresse id_{U} des utilisateurs en fonction de la partie de la mémoire,
- production d'une liste des adresses id_{S} des serveurs de service en fonction de la partie de la mémoire,
- production d'une liste des adresses id_{D} des dispositifs à paramétrer en fonction de la liste des identifiant/adresse id_{U} des utilisateurs et de la liste des adresses id_{S} des serveurs de service,
- production d'une liste des adresses id_{B} des boîtiers / téléphone à paramétrer en fonction de la liste des identifiant/adresse id_{U} des utilisateurs,
- lancement d'un utilitaire de topographie apte à déterminer les dispositifs et les boîtiers à mettre à jour parmi les dispositifs et boîtiers produits.

Avantageusement l'invention est aussi caractérisée en ce que la production de messages de configuration pour les dispositifs déterminés comporte les étapes suivantes :
- production par le serveur de paramétrage du réseau de messages de paramètres de traitement en un format de message standard,
- détermination du type de syntaxe supporté par chaque dispositif déterminé en fonction de leur modèle,
- pour chaque dispositif déterminé, traduction par le serveur de paramétrage du réseau du message standard en un message de configuration en fonction de leur syntaxe.

Avantageusement l'invention est aussi caractérisée en ce que la production de messages de configuration pour les dispositifs déterminés comporte les étapes suivantes :
- émission par le serveur de paramétrage du réseau de messages de paramètres de traitement en un format de message standard aux dispositifs déterminés,
- réception par les dispositifs déterminés des messages standards,
- chaque dispositif déterminé traduit un champ de paramétrage du message standard reçu en une syntaxe intelligible pour des moyens de traitement du dispositif correspondant.

Avantageusement l'invention est aussi caractérisée en ce qu'il met en oeuvre une opération d'agrégation selon les étapes suivantes :
- lorsque plusieurs messages de configuration ont un comportement dynamique homogène par rapport à un critère d'agrégation alors,
- combinaison des messages de configuration en un macro message de configuration, ce macro message de configuration étant un assemblage de plusieurs messages de configuration, en fonction dudit critère d'agrégation.

Avantageusement l'invention est aussi caractérisée en ce que l'opération d'agrégation est exécutée, soit par un microprocesseur du serveur de paramétrage du réseau, soit par chaque microprocesseur des dispositifs du réseau pour chacun desdits dispositifs.

Avantageusement l'invention est aussi caractérisée en ce que la combinaison des messages de configuration est une somme, un maximum ou un opérateur logique.

Avantageusement l'invention est aussi caractérisée en ce que le critère d'agrégation est défini en fonction de l'adresse IP.

Avantageusement l'invention est aussi caractérisée en ce que le critère d'agrégation est défini en fonction du numéro du port.

Avantageusement l'invention est aussi caractérisée en ce que le critère d'agrégation est défini en fonction du profil du client mobile.

L'invention concerne également un réseau télématique configuré par un serveur de paramétrage de réseau apte à mettre en oeuvre le procédé de mise à jour de paramètres du réseau selon l'invention.

### Brève description des dessins

L'invention sera mieux comprise à la lecture de la description qui suit et à l'examen des figures qui l'accompagnent. Celles-ci sont présentées à titre indicatif et nullement limitatif de l'invention.
La figure 1 montre une représentation schématique d'un réseau d'un opérateur muni des moyens perfectionnés de l'invention.
La figure 2 montre une illustration de moyens mettant en oeuvre le procédé de l'invention.
Les figures 3 et 4 montrent des exemples d'application des moyens perfectionnés de l'invention dans un ensemble de réseaux hétérogènes.

### Description détaillée de modes de réalisation de l'invention

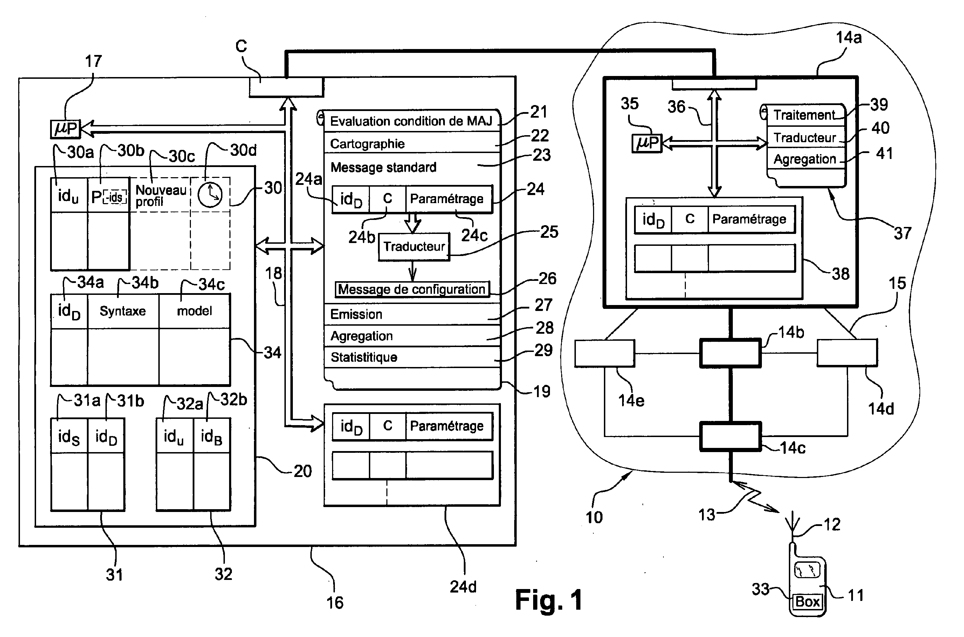

La figure 1 montre un réseau 10 d'un opérateur de téléphonie mobile en liaison avec un poste 11 d'un utilisateur. Dans l'exemple de la figure 1, le poste 11 de l'utilisateur est un téléphone 11 mobile. Le téléphone 11 comporte une antenne 12 lui permettant d'effectuer une liaison 13 radioélectrique avec le réseau 10.

Le téléphone 11 comporte des circuits électroniques (non représentés) connectés à l'antenne 12. Le rôle des circuits est d'assurer l'interface radio entre le téléphone 11 et le réseau 10. Dans la description, on a choisi la norme GSM, mais il pourrait s'agir d'une autre norme, comme le PCS, le DCS, l'UMTS ou toutes autres normes radioélectriques existantes et/ou à venir.

Le poste 11 pourrait aussi être un ordinateur individuel, un assistant personnel ou tout autre dispositif équivalent.

Le réseau 10 n'est pas montré en détail. Pour la description on considère que le réseau 10 comporte tous les éléments nécessaires permettant, par exemple, au téléphone 11 de se connecter à l'Internet. Ainsi le réseau 10 comporte entre autres une station de base à laquelle est connecté le téléphone 11 ainsi que tous les équipements permettant de raccorder la station de base à l'Internet.

Le réseau 10 comporte au moins un dispositif 14a de transport et de sécurité. Dans l'exemple de la figure 1, le réseau comporte cinq dispositifs 14a à 14e de transport et de sécurité. Un dispositif 14a à 14e de transport et de sécurité peut être notamment un routeur, un switch ou un firewall.

Les dispositifs 14a à 14e sont reliés les uns aux autres par une voie 15 de transmission. Cette voie 15 de transmission peut être notamment des câbles dans lesquels circulent des signaux électriques ou des ondes radios ou des fibres optiques. Cette voie 15 de transmission permet de connecter les dispositifs 14a à 14e assurant ainsi l'interconnexion des dispositifs et des protocoles.

Dans l'invention, le réseau 10 est configuré par un serveur 16 de paramétrage. Ce serveur 16 de paramétrage permet de configurer l'ensemble des dispositifs 14a à 14e du réseau en temps réel et simultanément. Ainsi, avec ce type de configuration du réseau par le serveur 16, il n'est plus nécessaire, comme dans l'état de la technique, de configurer manuellement chaque dispositif du réseau. Cette configuration automatique du réseau diminue de manière considérable l'intervention humaine dans le réseau, les erreurs humaines ainsi que le temps de paramétrage du réseau.

Dans la description on prête des actions à des appareils ou à des programmes, cela signifie que ces actions sont exécutées par un microprocesseur de cet appareil ou de l'appareil comportant le programme, ledit microprocesseur étant alors commandé par des codes instruction enregistrés dans une mémoire de l'appareil. Ces codes instruction permettent de mettre en oeuvre les moyens de l'appareil et donc de réaliser l'action entreprise.

Le serveur 16 comporte un microprocesseur 17 connecté à un bus 18. Le serveur 16 comporte aussi une mémoire 19 de programme et une mémoire 20 de paramétrage. La mémoire 19 de programme est divisée en plusieurs zones, chaque zone correspondant à une fonction ou à un mode de fonctionnement du programme du serveur 16. Une zone 21 comporte des codes instruction pour évaluer une condition de mise à jour des paramètres du réseau, via la mémoire 20 de paramétrage.

Une zone 22 comporte des codes instruction correspondant à la mise en oeuvre d'un utilitaire de topographie du réseau comportant des dispositifs à paramétrer. La mise en oeuvre de cet utilitaire est, par exemple, déclenché par la détection d'une condition de mise à jour. Cet utilitaire de topographie permet de déterminer un chemin de parcours d'un flux entre le serveur 16 de paramétrage et le téléphone 11 de l'utilisateur.

Un chemin est une liste ordonnée de dispositifs, ou plus exactement d'identifiants de dispositifs, chaque dispositif de la liste étant directement (c'est-à-dire sans dispositif identifiable intermédiaire) connectés aux dispositifs immédiatement adjacents dans la liste.

Un flux est une pluralité de messages selon un protocole réseau. Ces messages sont cohérents du point de vue des données qu'ils comportent. C'est-à-dire, par exemple, qu'ils correspondent tous à une même requête, ou qu'ils correspondent tous à une réponse à une requête.

Un chemin de parcours est représenté en gras dans l'exemple de la figure 1. Le serveur 16 configure uniquement les paramètres du réseau des dispositifs 14a-14c présents sur ce chemin de parcours, d'où une configuration particulière et non globale pour chaque utilisateur du réseau.

Cet utilitaire de topographie peut être mis en oeuvre de manière grossière par des outils d'administration de réseau tel que notamment la commande « ping », ou la commande « tracert » aussi connu comme commande « traceroute ».

L'utilitaire de topographie produit un chemin à partir de deux extrémités correspondant à deux dispositifs devant échanger des données. Dans la plupart des cas une extrémité est un identifiant d'un dispositif client utilisé par un abonné de l'opérateur gérant le réseau à paramétrer. L'autre extrémité est un identifiant d'un serveur correspondant à un service souscrit par l'abonné. Le chemin correspond alors aux dispositifs devant être mis à jour relativement à l'abonné et au service. L'utilitaire de topographie permet de déterminer quels sont les dispositifs réseaux sollicités lorsque tel abonné cherche à accéder à tel service.

Cet utilitaire de topographie peut être également mis en oeuvre par une extraction d'une liste de dispositifs à configurer dans la mémoire 20 de paramétrage, en fonction notamment du profil de l'utilisateur et des services auxquels est abonné cet utilisateur.

Une zone 23 comporte des codes instruction correspondant à la production d'un message 24 de paramétrage de réseau dans un format standard. Ce message 24 comporte trois champs. Un premier champ 24a indique l'adresse du dispositif destinataire. Un deuxième champ 24b indique un code instruction de paramétrage. Le troisième champ 24c indique le bloc de données à transmettre à l'adresse indiquée par le premier champ 24a. Le contenu du troisième champ est donc traité par le dispositif destinataire du message 24 en fonction du contenu du deuxième champ.

Si le message 24 standard n'est pas tel quel intelligible au dispositif à paramétrer, le serveur peut comporter un traducteur 25 apte à traduire le troisième champ 24c en une syntaxe de message 26 de configuration compréhensible par le dispositif destinataire. Cette traduction est effectuée en fonction du deuxième champ 24b du message 24.

Les messages 24 standards de configuration sont stockés dans une base de données 24d. Cette base de données 24d est lisible à tous les opérateurs et à tous les constructeurs de dispositifs.

Une zone 27 comporte des codes instruction pour émettre soit le message 24 standard tel quel, soit le message 26 de configuration, selon les modes de réalisation de l'invention.

Une zone 28 comporte des codes instruction pour effectuer une opération d'agrégation des messages 24 standard de configuration des paramètres du réseau, afin d'optimiser le filtrage et le routage des flux.

Une zone 29 comporte des codes instruction pour collecter les données concernant notamment l'historique des connexions d'un utilisateur, la nature des flux, le débit des flux, l'usage des flux, la qualité de service. La liste n'est pas exhaustive. Ces données peuvent être collectées dans une base de données interne ou externe au serveur 16. Ces données collectées sont traitées afin d'obtenir des statiques d'utilisation du réseau de l'opérateur par l'utilisateur. Ces statistiques d'utilisation sont interprétées par l'opérateur afin d'optimiser le fonctionnement de son réseau.

Les mémoires 19 et 20 sont connectées au bus 18.

La mémoire 20 de paramétrage comporte plusieurs zones de données. Ici une zone est assimilée à une mémoire. La représentation des zones/mémoires n'est qu'une illustration d'implantation de composants et d'enregistrement de données. Dans la pratique ces mémoires sont unifiées ou distribuées selon des contraintes de taille de la base de données et/ou de rapidité des traitements souhaités.

Une zone 30 de données permet d'enregistrer un, ou plusieurs, identifiant/adresse id_{U} d'utilisateur abonné à l'opérateur gérant le réseau 10 et utilisant le téléphone 11 pour ses communications avec un serveur contrôleur réseau ou un serveur de service. Cet identifiant/adresse id_{U} permet au réseau d'identifier l'utilisateur. Cet identifiant/adresse id_{U} peut être lié à une adresse Internet IP (protocole Internet). Il peut aussi être lié à un numéro de téléphone permettant d'identifier le téléphone 11 sur le réseau cellulaire auquel est abonné son utilisateur. Ce dernier identifiant/adresse id_{U} est utilisé dans le cadre d'une communication via les messages courts, par exemple.

Cette zone 30 de données peut être une zone mémoire d'une carte d'identification de type USIM pour Universal Subscriber Identity Module ou SIM. A cet identifiant/adresse id_{U} est associé un profil de services et d'abonnements, qui est mémorisé dans une base de données du réseau.

La base de données du réseau peut être un enregistreur de localisation nominal plus connu sous le non anglais de HLR ou Home Location Register. Dans ce cas, elle est une base de données centrale comportant les informations relatives à tout abonné autorisé à utiliser ce réseau. Afin que les données soient cohérentes sur l'ensemble du réseau, c'est elle qui sert de référence aux autres bases de données locales du réseau.

La base de données du réseau peut être aussi un serveur connu sous le nom anglais de RADIUS ou Remote Authentication Dial-In User Service. Ce serveur RADIUS utilise un protocole client-serveur afin de centraliser des données d'authentification de l'utilisateur.

La base de données du réseau fournit ainsi au serveur 16 le profil de l'utilisateur correspondant à la liste des services auxquels a droit l'utilisateur, la qualité de service connu sous le nom anglais de QoS ou Quality of Service, une adresse IP ainsi que les règles de sécurité associées à cet utilisateur.

A partir du profil, des paramètres P du réseau sont définis notamment en fonction des services associés à l'identifiant/adresse id_{U} Ces paramètres P du réseau associés à cet identifiant/adresse id_{U} sont enregistrés dans la zone 30 de données. Les paramètres P comportent alors un champ où est enregistrée un identifiant id_{S} d'un serveur de service. Un tel identifiant id_{S} est, par exemple, soit une adresse Internet selon un protocole IP soit une URL pour Universal Resource Locator en anglais ou Localisation Universelle de Ressources. Dans une variante l'identifiant id_{S} est un simple identifiant alphanumérique. De même, les conditions de mises à jour des paramètres P du réseau sont enregistrées dans la zone 30 de données.

La zone 30 de données est, par exemple, structurée en une table. Par exemple chaque ligne de la table correspond à un utilisateur, chaque colonne de la table correspond à un renseignement sur cet utilisateur. Ainsi la zone 30 de données comporte une colonne 30a correspondant à un identifiant/adresse id_{U} de l'utilisateur, une colonne 30b correspondant aux paramètres du réseau, une colonne 30c correspondant à une condition de mise à jour asynchrone et une colonne 30d correspondant à une condition de mise à jour synchrone. La connaissance d'un identifiant id_{U} permet d'extraire de la table 30 N lignes, N pouvant être un entier quelconque.

Dans une variante, dans une zone 31 de données de la mémoire 20 de paramétrage, est enregistrée une liste d'adresses id_{D} de dispositifs à configurer dans le réseau 10. Cette liste d'adresses id_{D} de dispositifs à configurer associe des identifiants de dispositif à des identifiants de services id_{S}. La zone 31 de données est, par exemple, structurée en une table. Par exemple chaque ligne de la table correspond à un identifiant id_{S} de service qui corresponde la plus souvent à un identifiant de serveur, chaque colonne de la table correspond à un renseignement sur cette adresse. Ainsi la zone 31 de données comporte une colonne 31 a correspondant à un identifiant id_{S} de serveur de service, une colonne 31 b correspondant aux identifiant id_{D} de dispositifs à configurer pour ce service. Dans cette variante la table de la zone 31 est utilisée pour réaliser une cartographie du réseau.

Dans une zone 32 de données de la mémoire 20 de paramétrage, est enregistrée une adresse id_{B} du téléphone 11 à configurer ou d'un boîtier 33 équivalent, du point de vue de l'invention, au téléphone 11.

Ici on introduit la notion de boîtier mieux connue sous le nom de « box ». Cette notion est liée aux offres multi services, actuellement appelée « triple play » (pour trois services) qui permettent d'obtenir plusieurs services via un seul dispositif : le boîtier 33. Ces services sont, actuellement, Internet, VoIP et Télévision. Dans ce cas un téléphone est alors connecté à ce boîtier. Ce téléphone peut être le téléphone 11 qui est alors 'masqué' par le boîtier 33 qui joue un rôle de routeur SIP par exemple. Le téléphone peut aussi être apte à communiquer de manière autonome directement sur Internet. On parle alors de convergence. On illustre donc ici que l'invention s'adapte à tous ces cas de figures. Il suffit que les zones de données 30 et 32 soient à jour pour que le paramétrage s'effectue correctement quel que soit le cas de figure. Une mise en oeuvre est décrite plus loin. On parle alors indifféremment d'un boîtier ou d'un téléphone.

Cet identifiant id_{B} du boîtier 33 ou du téléphone 11 est déterminée en fonction de l'identifiant/adresse id_{U}. La zone 32 de données est, par exemple, structurée en une table. Par exemple chaque ligne de la table correspond à un utilisateur, chaque colonne de la table correspond à un renseignement sur cet utilisateur. Ainsi la zone 32 de données comporte une colonne 32a correspondant à un identifiant/adresse id_{U} de l'utilisateur, une colonne 32b correspondant à une adresse id_{B} d'un box.

Dans une zone 34 de données de la mémoire 20 de paramétrage, est enregistrée une liste de syntaxes de l'ensemble des dispositifs 14a à 14e du réseau 10. Une syntaxe d'un dispositif est un ensemble de règles déterminant l'écriture et la disposition des instructions d'un programme, de telle sorte que ce langage soit accessible audit dispositif. Cette liste de syntaxes de l'ensemble des dispositifs est associée respectivement à une liste de modèles de dispositifs. Un modèle de dispositif est défini selon le constructeur dudit dispositif. En fonction de l'adresse id_{D} d'un dispositif du réseau, il est déterminé le modèle du dispositif situé à cette adresse id_{D}, A partir de ce modèle du dispositif est déduite la syntaxe dudit dispositif.

La zone 34 de données est, par exemple, structurée en une table. Par exemple chaque ligne de la table correspond à une adresse id_{D} de dispositifs du réseau, chaque colonne de la table correspond à un renseignement sur cette adresse. Ainsi la zone 34 de données comporte une colonne 34a correspondant à une adresse id_{D} de dispositif, une colonne 34b correspondant à une syntaxe de dispositif, une colonne 34c correspondant à un modèle de dispositif.

Le serveur 16 est connecté au réseau 10 via des circuits C d'interface de connexion. Les circuits C sont d'autre part connectés au bus 18 interne du serveur 16.

Les dispositifs 14a à 14e du réseau sont des équipements de traitement des données. L'exemple de la figure 1 montre une représentation schématique du dispositif 14a. Les autres dispositifs du réseau 14b à 14e ont les mêmes caractéristiques et les mêmes fonctions que le dispositif 14a. Le dispositif 14a comporte un microprocesseur 35 relié à un bus 36. Le dispositif 14a comporte une mémoire 37 de programme et une mémoire 38 de paramétrage. La mémoire 37 de programme est divisée en plusieurs zones, chaque zone correspondant à une fonction ou à un mode de fonctionnement du programme du dispositif 14a.

Une zone 39 comporte des codes instruction pour traiter les flux reçus afin de les traiter/acheminer. Ces traitements sont fonction des caractéristiques du flux et du contenu de la mémoire 38 relativement à ces caractéristiques. Classiquement la mémoire 38 comporte une liste de règles évaluée pour chaque paquets de données / messages passant par le dispositif comportant la zone mémoire 38. Une zone 40 comporte des codes instruction pour traduire le message standard reçu du serveur 16 en un message de configuration, lorsque ce message est dans une syntaxe inintelligible audit dispositif. Une zone 41 comporte des codes instruction pour effectuer une opération d'agrégation des messages de configuration enregistrés dans la mémoire 38 de données.

Les mémoires 37 et 38 sont connectées au bus 36.

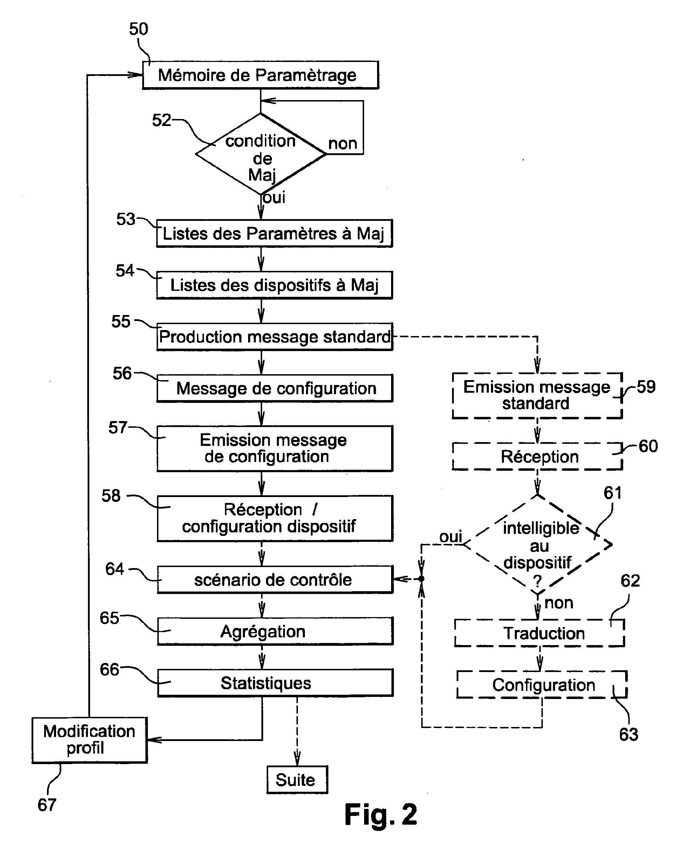

La figure 2 montre une illustration d'étapes correspondant à une mise en oeuvre du procédé selon l'invention. La figure 2 montre une première étape préliminaire 50 dans laquelle l'utilisateur est identifié par le réseau par son identifiant/adresse idU. A cet identifiant/adresse idU est associé dans la mémoire de paramétrage du serveur au moins un paramètre P du réseau d'au moins un utilisateur. Dans cette étape 50 préliminaire, l'utilisateur fait une requête de connexion à un service de l'opérateur. Il est attribué à l'utilisateur l'adresse IP présent dans son profil.

Dans une étape 52 suivant la demande de connexion, les codes instructions de la zone 21 évaluent des conditions de mises à jour. L'étape 52 est mise en oeuvre de manière synchrone, par un gestionnaire de tâche, ou asynchrone, par un gestionnaire d'interruption.

Une condition de mise à jour peut être asynchrone. Dans ce cas, elle n'est pas planifiée. Cette condition de mise à jour asynchrone peut être par exemple une modification du profil de l'utilisateur, telle qu'un service de l'opérateur auquel s'abonne ou se désabonne l'utilisateur.

Cette modification du profil de l'utilisateur peut être effectuée par un utilisateur, final (client de l'opérateur) ou administrateur (salarié de l'opérateur), via une interface homme machine, par exemple via une interface dite « web ». Une interface dite « web » est un service basé sur un serveur http qui interprète des requêtes des utilisateurs pour produire des formulaires et traiter les données reçues via une validation par un utilisateur de ces formulaires. Une telle interface permet une authentification, et donc la détermination d'une valeur pour un identifiant idᵤ, ce qui permet de déterminer quelles lignes de la zone 30 de données sont éditable via l'interface homme machine.

Cette modification du profil de l'utilisateur peut être automatiquement déclenchée par un résultat des analyses des historiques de connexions de l'utilisateur. Cette modification du profil de l'utilisateur peut être également provoquée par un changement de l'adresse IP présente dans le profil de l'utilisateur. Cette adresse IP présente dans le profil peut être une adresse IP par défaut. Elle peut être également l'adresse IP attribuée par le réseau lors de la dernière connexion de l'utilisateur à un service de l'utilisateur.

D'une connexion à la suivante de l'utilisateur à un service de l'opérateur, l'adresse IP attribuée par le réseau peut être différente de celle présente dans le profil. Dans ce cas, l'adresse IP présente dans le profil est substituée par l'adresse IP attribuée par le réseau. Cette substitution équivaut à une modification du profil de l'utilisateur.

Une condition de mise à jour peut être synchrone. Dans ce cas, elle est planifiée temporellement par un superviseur du réseau. Cette condition de mise à jour synchrone peut être par exemple un audit du réseau ou un nettoyage des règles/filtres obsolètes présents dans les dispositifs du réseau.

Dans un mode de réalisation, l'évaluation des conditions de mises à jour est réalisée par une requête d'interrogation permanente des colonnes 30c et 30d de la zone 30 de données. Lorsque dans la colonne 30c une condition de mise à jour asynchrone est enregistrée et/ou dans la colonne 30d la date planifiée par le superviseur est atteinte ou dépassée, la requête d'interrogation renvoi « vrai », il y a donc une mise à jour à faire pour le réseau. Le contenu de la colonne 30c est modifié :
- à chaque fois qu'une ligne de la table 30 est modifiée. Cela signifie alors : modification de paramétrage inconnue du réseau
- à chaque fois qu'un message de configuration concernant cette ligne est envoyé vers le réseau. Cela signifie alors : le paramétrage a été communiqué au réseau.

Dans une étape 53 faisant suite à l'étape 52 dans le cas où l'interrogation de l'étape 52 a renvoyé « vrai », le serveur 16 détermine la partie de la zone 30 de données concernée par la requête d'interrogation à « vrai », c'est-à-dire toute les lignes de la zone 30 de données pour lesquelles l'étape 52 a renvoyé « vrai » ce qui correspond à toute les lignes pour lesquelles un critère de mise à jour est validé. Le microprocesseur extrait de cette partie de la zone 30 de données via la colonne 30a une liste des identifiant/adresse id_{U} des utilisateurs correspondant à la condition de mise à jour détectée. Le microprocesseur extrait également de cette partie de la zone 30 de données via la colonne 30b la liste des paramètres P du réseau à mettre à jour correspondant à la condition de mise à jour détectée.

A partir de la liste des paramètres P extraites, le microprocesseur extrait la liste des adresses id_{S} des serveurs de service correspondant à la condition de mise à jour détectée. Puis, le microprocesseur extrait via la colonne 31 b de la zone 31 de données la liste des adresses id_{D} des dispositifs à paramétrer en fonction de la liste des adresses id_{S} des serveurs de service de la colonne 31 a. Enfin, le microprocesseur extrait via la colonne 32b de la zone 32 de données la liste des adresses id_{B} des boîtiers / téléphone à paramétrer en fonction de la liste des identifiant/adresse id_{U} des utilisateurs de la colonne 32a

Dans une étape 54 suivant l'étape 53, le microprocesseur 17 exécute l'utilitaire de topographie de la zone 22 pour déterminer la cartographie des dispositifs du réseau à configurer. Cet utilitaire de topographie des dispositifs à paramétrer est déclenché dès que la requête d'interrogation d'une condition de mise à jour renvoi «vrai». En fonction de la liste des adresses id_{D} et de la liste des adresses id_{B}, l'utilitaire de topographie détermine un ou des chemins du flux de données. Ces chemins relient les boîtiers / téléphones aux serveurs correspondant aux services configurés dans la colonne 30b de la zone 30 de données de la mémoire 20. L'ensemble de ces chemins correspond à une liste de dispositifs à mettre à jour dans le réseau. On parle d'adresses idᵤ et id_{B} car dans un réseau des identifiants sont équivalents à des adresses via un mécanisme de résolution d'adresses de type DNS par exemple.

Dans une étape 55 suivant l'étape 54, le microprocesseur 17 produit le ou les messages 24 de paramétrage du réseau dans un format standard. Des étapes 56-58 et 59-63 montrent deux modes de réalisation de traduction et de transmission du message 24 standard aux dispositifs à configurer. Ces messages sont produits en fonction du contenu de la colonne 30b de la zone 30 de la mémoire 20.

Dans l'étape 56 suivant l'étape 55, à partir de la liste d'adresses id_{D} des dispositifs actifs à paramétrer produite à l'étape 54, le microprocesseur 17 connaît la syntaxe et le modèle des dispositifs, selon la mémoire 34. Ainsi, pour chaque adresse id_{D} de dispositif, le microprocesseur traduit le message standard en un message de configuration en fonction de la syntaxe dudit dispositif.

Dans l'étape 57 suivant l'étape 56, à chaque adresse id_{D} de dispositifs actifs à paramétrer est transmis un message de configuration intelligible audit dispositif, c'est-à-dire les messages traduits à l'étape 56.

Dans l'étape 58 suivant l'étape 57, les dispositifs destinataires reçoivent leur(s) message(s) de configuration. Ils configurent leurs paramètres en fonction du message de configuration reçu. Cette configuration est une mise à jour de leur mémoire 38 de configuration. A partir de ce moment, les nouveaux paramètres correspondant au contenu de la mémoire 20 sont actifs sur le dispositif à configurer.

Dans l'étape 59 suivant l'étape 55, à chaque adresse id_{D} de dispositifs actifs à paramétrer est transmis un message de configuration standard.

Dans l'étape 60 suivant l'étape 59, les dispositifs destinataires reçoivent leur message de configuration standard. Chaque microprocesseur de chaque dispositif vérifie si le message standard reçu est une syntaxe compréhensible audit dispositif. Si c'est le cas, le microprocesseur effectue, dans l'étape 63, une configuration des paramètres du réseau dudit dispositif en fonction du message de configuration reçu.

Sinon, le microprocesseur exécute les codes instructions de la zone 40 de traduction. Pour chaque dispositif, le message standard est traduit en un message de configuration en fonction de sa syntaxe. Puis, dans l'étape 63, le microprocesseur configure les paramètres du réseau en fonction du message de configuration traduite pour chaque dispositif correspondant.

Après avoir exécuté ces étapes de paramétrage du réseau, la connexion de l'utilisateur au service demandé est autorisée.

Les étapes 64, 65 et 66 avec 67 sont des étapes qui peuvent être exécutées à tout moment, indépendamment des autres étapes.

Dans l'étape 64, le serveur met en oeuvre un choix d'un scénario de contrôle des flux. Ce choix d'un scénario de contrôle permet de définir le choix de parcours des flux. Ce choix de parcours peut être mis en oeuvre par un système de détection d'intrusion (ou IDS: Intrusion Detection System en anglais). Ce système de détection d'intrusion est un mécanisme destiné à repérer des activités anormales ou suspectes sur le réseau.

Ce choix de parcours peut être mis en oeuvre par un système de prévention d'intrusion (ou IPS: Intrusion Prevention System en anglais). Ce système de prévention d'intrusion est un outil permettant de prendre des mesures afin de diminuer les risques d'impact d'une attaque. Ces exemples de choix de parcours ne sont pas exhaustifs.

Dans l'étape 65, il est mis en oeuvre une opération d'agrégation des messages de configuration du paramétrage. Cette opération d'agrégation est exécutée, soit par le microprocesseur du serveur 16 de paramétrage du réseau, soit par chaque microprocesseur des dispositifs du réseau pour chacun desdits dispositifs. Elle a principalement pour but d'optimiser le filtrage et le routage des flux traversant les dispositifs actifs du réseau.

Cette opération d'agrégation permet de réunir plusieurs messages de configuration en un seul, dans la mesure où, par exemple, ces messages de configuration ont un comportement dynamique homogène. Ainsi, l'opération d'agrégation permet de définir un « macro » message de configuration comme étant un assemblage de plusieurs messages de configuration.

Cette opération d'agrégation est une combinaison qui peut être une somme, un maximum ou un opérateur logique.

Pour mettre en oeuvre cette opération d'agrégation, le microprocesseur du serveur ou du dispositif définit des critères d'agrégation permettant d'optimiser les paramètres du réseau de l'ensemble des utilisateurs. Ces critères d'agrégation peuvent être notamment un numéro de port du téléphone de l'utilisateur, une adresse IP de l'utilisateur, le numéro de téléphone de l'utilisateur, le contenu du flux. La liste n'est pas exhaustive.

Si plusieurs paramètres de configuration sont homogènes pour, par exemple plusieurs adresses IP, le microprocesseur combine ces messages de configuration en un seul pour lesdites adresses IP. De manière générale, dans l'invention, lorsque plusieurs messages de configuration sont homogènes pour un des critères d'agrégation, le microprocesseur applique l'opération d'agrégation aux messages de configuration pour ledit critère d'agrégation.

Dans l'étape 65, il est mis en oeuvre une opération statistique. Cette opération statistique permet à l'opérateur d'analyser le comportement de l'utilisateur lorsqu'il est sur le réseau. Cette opération statistique est exécutée par le microprocesseur du serveur. Elle a principalement pour but d'une part de mesurer le comportement d'un utilisateur du réseau sur ledit réseau et d'autre part de permettre à l'opérateur de modifier automatiquement le profil dudit utilisateur en fonction de la mesure.

Pour effectuer cette mesure, à chaque connexion de l'utilisateur le microprocesseur exécute les codes instructions de la zone 29, pour collecter dans une base de données des informations pertinentes relatives au comportement de l'utilisateur dans le réseau. Puis, il traite l'ensemble des informations stockées dans cette base de données. L'ensemble de ces informations stockées dans la base de données représente le profil des historiques de connexions de l'utilisateur.

Le traitement des données est mis en oeuvre par une opération statistique. Le résultat obtenu avec cette opération statistique est analysée afin de détecter d'éventuelles anomalies de comportement. Une anomalie pouvant être par exemple une utilisation abusive des services de l'opérateur.

Dès la détection d'une anomalie, le microprocesseur modifie en conséquence, dans une étape 67 suivante, le profil de l'utilisateur dans la colonne 30c de la zone 30 de données. Les étapes 50 à 63 précédemment décrites sont réitérées, lors de la demande de connexion de l'utilisateur.

L'utilisation des statistiques permet au serveur de modifier directement et automatiquement le profil des utilisateurs dans la zone 30 de données. Une modification par rétroaction d'une base de données utilisateurs n'est pas possible actuellement. Toute modification de ces types de bases de données est effectuée de manière manuelle. Avec l'invention, avec l'analyse du comportement des utilisateurs leur profil est modifié sans intervention humaine.

Aujourd'hui, en cas d'usage abusif de services de l'opérateur il n'existe aucun moyen technique pour y remédier. Avec l'invention, l'opérateur a la possibilité avec l'analyse des statistiques de changer dynamiquement les routes. L'invention permet ainsi de réaliser une restructuration des routes du réseau pour pénaliser des utilisateurs fautifs ou pour gratifier des utilisateurs irréprochables.

Le profil des historiques de connexions de l'utilisateur collecté dans la base de données peut être copié et transféré dans un ordinateur d'un administrateur du réseau de l'opérateur. Un microprocesseur de l'ordinateur de l'administrateur peut exécuter ce profil de connexions dans le but d'observer les connexions de l'utilisateur sur le réseau. Cette observation permet à l'administrateur de réseau de détecter facilement d'éventuels problèmes de connexions.

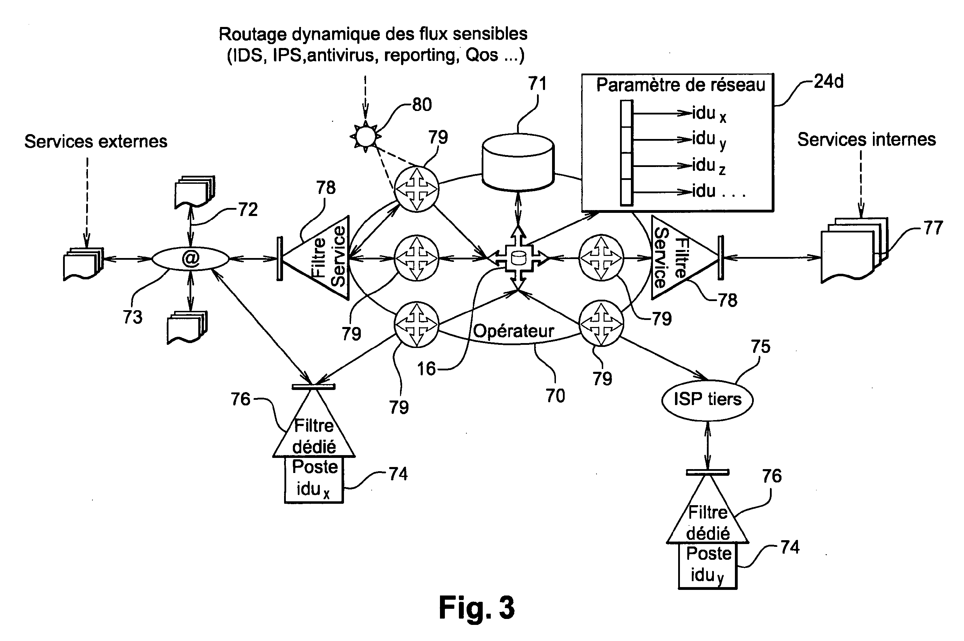

La figure 3 montre un exemple d'application du procédé selon l'invention dans un ensemble de réseaux hétérogènes. L'exemple de la figure 3 montre l'application de l'invention dans les infrastructures actuelles de l'opérateur. Le réseau 70 de l'opérateur est configuré par le serveur 16 de paramétrage de réseau. Le serveur 16 est relié à une base de données 71 utilisateur du réseau de l'opérateur. C'est à partir de cette base de données 71 que s'effectue la gestion des abonnés de l'opérateur. La base de données 71 fournit au serveur 16 un profil de l'utilisateur. On peut retrouver dans cette base 71 la description de l'identité de l'abonné, la liste des services auxquels il a droit ainsi que les données relatives à sa localisation dans le réseau.

Certains services de l'opérateur sont externalisés vers des prestataires de services. Le réseau 70 de l'opérateur est relié à des réseaux 72 de services de transport de prestataire de services via internet 73. Un poste 74 de l'utilisateur id_{UX} peut être connecté au réseau 70 de l'opérateur directement ou via le réseau 73 internet. Un poste 74 de l'utilisateur peut être un téléphone mobile ou un ordinateur. Un poste 74 de l'utilisateur id_{UY} est connecté au réseau 70 de l'opérateur via un réseau 75 d'un fournisseur de services Internet (ou Internet service provider en anglais). Chaque poste 74 d'un utilisateur comporte un boîtier 76 de connexion.

Le réseau 70 de l'opérateur est relié via des voies de transmissions à des services 77 internes à l'opérateur. Des filtres 78, tels que des firewalls, sont placés entre le réseau 73 internet et le réseau 70 de l'opérateur et entre le réseau 70 de l'opérateur et ses services 77 internes afin de permettre le passage sélectif des flux d'informations, ainsi que la neutralisation des tentatives de pénétration extérieures.

Les infrastructures des prestataires de services, des fournisseurs d'accès et des opérateurs sont différentes. Cette différence complexifie dans l'état de la technique la configuration des routeurs 79 et des filtres 78 et 76.

Dans l'invention, le serveur 16 produit pour un utilisateur donné, comme précédemment décrit, un message de configuration des paramètres du réseau, dès la demande de connexion dudit utilisateur. L'ensemble des messages de configuration produits sont stockés dans la base de données 24d du serveur, en vue de leur agrégation. Le serveur 16 transmet aux routeurs 79 et aux filtres 76 et 78 du réseau les messages de configuration permettant leur paramétrage.

Avec l'invention, les paramètres du réseau sont gérés de manière centralisée au niveau de l'opérateur dans le serveur 16. Cette gestion centralisée des paramètres du réseau permet de faire face à la complexité grandissante des infrastructures des opérateurs.

Le fait dans l'invention de gérer cas par cas les paramètres du réseau, et non de manière globale comme dans l'état de la technique, permet d'éliminer les problèmes de sécurité apparus avec les contraintes techniques divergentes des réseaux des nouvelles technologies.

Cette gestion centralisée et auto-adaptative des paramètres du réseau permet également un filtrage dynamique des routeurs 79 et des filtres 76 et 78. Ce filtrage dynamique est réalisé par une injection dynamique des paramètres du réseau adaptée au profil et à l'usage de l'utilisateur dans des dispositifs actifs du réseau, lors de la demande de connexion.

Cette gestion centralisée et auto-adaptative des paramètres du réseau permet également un routage dynamique des flux sensibles 80.

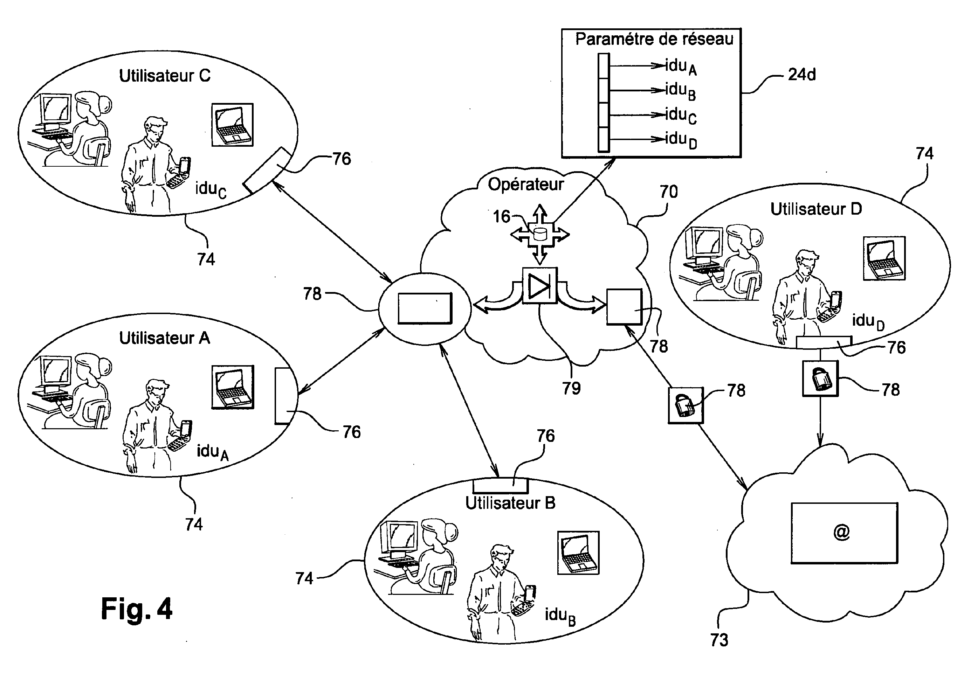

La figure 4 montre un exemple d'application du procédé selon l'invention lors de la connexion de plusieurs postes 74 d'utilisateurs au réseau 70 de l'opérateur. Dans l'exemple de la figure 4, les utilisateurs A, B et C ont leur poste 74 qui est directement connecté au réseau 70. Le poste 74 de l'utilisateur D est connecté au réseau via le réseau 73 Internet. Lors de la connexion de chaque poste 74, le serveur 16 produit des messages de configuration, correspondant au profil et à l'usage dudit utilisateur, à transmettre aux dispositifs actifs du réseau. Ces dispositifs actifs déterminés par l'utilitaire topographique sont les routeurs 79 et les filtres 78 dans lesquels les données circulent.

L'invention permet ainsi de mettre en place un mécanisme de protection personnalisée à la demande.

## Revendications

1. Procédé de mise à jour sélective de paramètres (P) du réseau et de traitement de paquets de données dans des dispositifs de transport d'un réseau (10) télématique, ou la mise à jour sélective des paramètres du réseau est individualisée pour un poste utilisateur (11, 74) donné selon les étapes suivantes mises en oeuvre par un serveur (16) de paramétrage du réseau :
- association dans une mémoire (30) de paramétrage du serveur de paramétrage du réseau d'au moins un paramètre à au moins un profil de l'utilisateur,
- requête de connexion de l'utilisateur au réseau,
- avant l'autorisation de connexion, évaluation (21, 52) d'une condition de mise à jour des paramètres du réseau, **caractérisé en ce que** :
- en cas d'évaluation positive :
- détermination des dispositifs (34a, 14a-14e) du réseau à mettre à jour en fonction de la condition de mise à jour,
- production de messages de configuration (26, 56) pour les dispositifs déterminés,
- émission (27, 57) des messages de configuration produits,
- réception (58, 60) et prise en compte des messages émis par les dispositifs destinataires.

2. Procédé selon la revendication 1, **caractérisé en ce que** la condition de mise à jour est une modification du profil de l'utilisateur dans la mémoire de paramétrage, cette modification étant effectuée par un utilisateur ou un administrateur du réseau.

3. Procédé selon la revendication 1, **caractérisé en ce que** la condition de mise à jour est une modification du profil de l'utilisateur dans la mémoire de paramétrage, cette modification (67) étant exécutée par le serveur en fonction du résultat d'une analyse statistique (29, 66) d'un profil des historiques de connexions d'un utilisateur du réseau.

4. Procédé selon la revendication 3, **caractérisé en ce qu'**il comporte les étapes suivantes :
- transfert du profil des historiques de connexions de l'utilisateur vers un ordinateur d'un administrateur du réseau,
- exécution de ce profil dans cet ordinateur,
- détection d'éventuelles anomalies de connexions de l'utilisateur sur le réseau.

5. Procédé selon la revendication 1, **caractérisé en ce que** la condition de mise à jour est une modification du profil de l'utilisateur dans la mémoire de paramétrage, cette modification étant exécutée par le serveur en fonction d'un changement d'une adresse IP du profil de l'utilisateur.

6. Procédé selon la revendication 1, **caractérisé en ce que** la condition de mise à jour est une planification temporelle (30d) d'une mise à jour des paramètres du réseau.

7. Procédé selon l'une des revendications 1 à 6, **caractérisé en ce que** la détermination des dispositifs du réseau comporte les étapes suivantes:
- détermination de la partie de la mémoire (30c, 30d) de paramétrage concernée par la mise à jour en fonction de la condition de mise à jour,
- production d'une liste (30a) des identifiant/adresse id_{U} des utilisateurs en fonction de la partie de la mémoire,
- production d'une liste (31 a) des adresses id_{S} des serveurs de service en fonction de la partie de la mémoire,
- production d'une liste (31 b) des adresses id_{D} des dispositifs à paramétrer en fonction de la liste des identifiant/adresse id_{U} des utilisateurs et de la liste des adresses id_{S} des serveurs de service,
- production d'une liste (32b) des adresses id_{B} des boîtiers / téléphone à paramétrer en fonction de la liste des identifiant/adresse id_{U} des utilisateurs,
- lancement d'un utilitaire (22, 54) de topographie apte à déterminer les dispositifs et les boîtiers à mettre à jour parmi les dispositifs et boîtiers produits.

8. Procédé selon l'une des revendications 1 à 7, **caractérisé en ce que** la production de messages de configuration pour les dispositifs déterminés comporte les étapes suivantes :
- production par le serveur de paramétrage du réseau de messages de paramètres de traitement en un format de message standard (55),
- détermination du type de syntaxe (34b) supporté par chaque dispositif déterminé en fonction de leur modèle,
- pour chaque dispositif déterminé, traduction par le serveur de paramétrage du réseau du message standard en un message de configuration en fonction de leur syntaxe.

9. Procédé selon l'une des revendications 1 à 7, **caractérisé en ce que** la production de messages de configuration pour les dispositifs déterminés comporte les étapes suivantes :
- émission par le serveur de paramétrage du réseau de messages de paramètres de traitement en un format de message (55) standard aux dispositifs déterminés,
- réception par les dispositifs déterminés des messages standards,
- chaque dispositif déterminé traduit un champ de paramétrage (24c) du message standard reçu en une syntaxe intelligible pour des moyens de traitement du dispositif correspondant.

10. Procédé selon l'une des revendications 1 à 9, **caractérisé en ce qu'**il met en oeuvre une opération d'agrégation (28, 65) selon les étapes suivantes :
- lorsque plusieurs messages de configuration ont un comportement dynamique homogène par rapport à un critère d'agrégation alors,
- combinaison des messages de configuration en un macro message de configuration, ce macro message de configuration étant un assemblage de plusieurs messages de configuration, en fonction dudit critère d'agrégation.

11. Procédé selon la revendication 10, **caractérisé en ce que** l'opération d'agrégation est exécutée, soit par un microprocesseur (17) du serveur de paramétrage du réseau, soit par chaque microprocesseur (35) des dispositifs du réseau pour chacun desdits dispositifs.

12. Procédé selon la revendication 10, **caractérisé en ce que** la combinaison des messages de configuration est une somme, un maximum ou un opérateur logique.

13. Procédé selon la revendication 10, **caractérisé en ce que** le critère d'agrégation est défini en fonction de l'adresse IP.

14. Procédé selon la revendication 10, **caractérisé en ce que** le critère d'agrégation est défini en fonction du numéro du port.

15. Procédé selon la revendication 10, **caractérisé en ce que** le critère d'agrégation est défini en fonction du profil du client mobile.

16. Réseau (10) télématique configuré par un serveur (16) de paramétrage de réseau **caractérisé en ce que** ledit serveur comporte un microprocesseur apte à mettre en oeuvre un procédé de mise à jour de paramètres du réseau selon l'une quelconque des revendications 1 à 14.

## Patentansprüche

1. Verfahren für die selektive Aktualisierung von Parametern (P) des Netzwerks und zum Bearbeiten von Datenpaketen in den Transportvorrichtungen eines Telematiknetzwerks (10), bei dem die selektive Aktualisierung der Parameter des Netzwerks für eine gegebene Benutzerstation (11, 74) gemäß den folgenden Schritten individualisiert wird, die von einem Server (16) zum Parametrieren des Netzwerks angewandt werden:
- Zuordnung von zumindest einem Parameter in einem Speicher (30) zum Parametrieren des Parametrierservers des Netzwerks zu zumindest einem Profil des Benutzers,
- Antrag zum Einwählen des Benutzers ins Netzwerk,
- Vor der Einwahlfreigabe die Bewertung (21, 52) einer Bedingung für die Aktualisierung der Netzwerkparameter, **dadurch gekennzeichnet, dass**
- Im Falle einer positiven Bewertung:
- Vorrichtungen (34a, 14a-14e) des Netzwerks bestimmt werden, die je nach Aktualisierungsbedingung zu aktualisieren sind,
- Konfigurationsmeldungen (26, 56) für die bestimmten Vorrichtungen erzeugt werden,
- Die erzeugten Konfigurationsmeldungen (27, 57) ausgegeben werden,
- Die ausgegebenen Meldungen von den Destinationsvorrichtungen empfangen (58, 60) und berücksichtigt werden.

2. Verfahren nach Anspruch 1, **dadurch gekennzeichnet, dass** die Aktualisierungsbedingung eine Änderung des Benutzerprofils im Parametrierspeicher ist, wobei diese Änderung durch einen Benutzer oder einen Administrator des Netzwerkes durchgeführt wird.

3. Verfahren nach Anspruch 1, **dadurch gekennzeichnet, dass** die Aktualisierungsbedingung eine Änderung des Benutzerprofils im Parametrierspeicher ist, und diese Änderung (67) je nach Ergebnis einer statistischen Analyse (29, 66) eines Profils der Einwahlhistorien eines Netzwerkbenutzers vom Server ausgeführt wird.

4. Verfahren nach Anspruch 3, **dadurch gekennzeichnet, dass** es die folgenden Schritte umfasst:
- Die Übertragung des Profils der Einwahlhistorien des Benutzers in einen Computer eines Netzwerkadministrators,
- Die Ausführung dieses Profils in diesem Computer,
- Die Erfassung eventueller Anomalien bei den Einwahlvorgängen des Benutzers ins Netzwerk.

5. Verfahren nach Anspruch 1, **dadurch gekennzeichnet, dass** die Aktualisierungsbedingung eine Änderung des Benutzerprofils im Parametrierspeicher ist, und diese Änderung in Abhängigkeit von einer Änderung einer IP Adresse des Benutzerprofils vom Server ausgeführt wird.

6. Verfahren nach Anspruch 1, **dadurch gekennzeichnet, dass** die Aktualisierungsbedingung ein Zeitplan (30d) für eine Aktualisierung der Netzwerkparameter ist.

7. Verfahren nach einem der Ansprüche 1 bis 6, **dadurch gekennzeichnet, dass** die Bestimmung der Vorrichtungen des Netzwerks die folgenden Schritte umfasst:
- Die Bestimmung jenes Abschnitts des Parametrierspeichers (30c, 30d), der je nach Aktualisierungsbedingung von der Aktualisierung betroffen ist.
- Die Erstellung einer Liste (30a) mit der Benutzeridentifizierung/Adresse idᵤ der Benutzer je nach Speicherabschnitt,
- Die Erstellung einer Liste (31 a) mit den Adressen idₛ der Dienstserver je nach Speicherabschnitt,
- Die Erstellung einer Liste (31 b) mit den Adressen id_{D} der Vorrichtungen, die je nach Liste mit der Benutzeridentifizierung/Adresse idᵤ der Benutzer und je nach Liste mit den Adressen idₛ der Dienstserver parametriert werden sollen,
- Die Erstellung einer Liste (32b) mit den Adressen id_{B} der Kästen/ des Telefons, die je nach Liste mit der Benutzeridentifizierung/Adresse idᵤ der Benutzer parametriert werden sollen,
- Der Start eines Topographie-Hilfsprogramms (22, 54), das in der Lage ist, die Vorrichtungen und die Kästen zu bestimmen, die unter den erzeugten Vorrichtungen und Kästen zu aktualisieren sind.

8. Verfahren nach einem der Ansprüche 1 bis 7, **dadurch gekennzeichnet, dass** das Erzeugen von Konfigurationsmeldungen für die bestimmten Vorrichtungen die folgenden Schritte umfasst:
- Das Erzeugen von Bearbeitungsparametermeldungen durch den Parametrierserver des Netzwerks in einem Standardmeldungsformat (55),
- Die Bestimmung des Syntaxtyps (34b), der von jeder bestimmten Vorrichtung in Abhängigkeit von ihrem Modell unterstützt wird,
- Die Übersetzung der Standardmeldung für jede bestimmte Vorrichtung durch den Parametrierserver in eine Konfigurationsmeldung in Abhängigkeit von ihrer Syntax.

9. Verfahren nach einem der Ansprüche 1 bis 7, **dadurch gekennzeichnet, dass** das Erzeugen von Konfigurationsmeldungen für die bestimmten Vorrichtungen die folgenden Schritte umfasst:
- Das Senden von Bearbeitungsparametermeldungen an die bestimmten Vorrichtungen durch den Parametrierserver des Netzwerks in einem Standardmeldungsformat (55),
- Der Empfang der Standardmeldungen durch die bestimmten Vorrichtungen,
- Jede bestimmte Vorrichtung übersetzt ein Parametrierfeld (24c) der empfangenen Standardmeldung in eine für die Bearbeitungsmittel der entsprechenden Vorrichtungen verständliche Syntax.

10. Verfahren nach einem der Ansprüche 1 bis 9, **dadurch gekennzeichnet, dass** es einen Aggregationsvorgang (28, 65) gemäß den folgenden Schritten anwendet:
- Wenn mehrere Konfigurationsmeldungen ein homogenes dynamisches Verhalten in Bezug auf ein Aggregationskriterium aufweise,
- Die Kombination der Konfigurationsmeldungen in eine Makro-Konfigurationsmeldung, wobei diese Makro-Konfigurationsmeldung eine Zusammensetzung mehrerer Konfigurationsmeldungen in Abhängigkeit vom besagten Aggregationskriterium ist.

11. Verfahren nach Anspruch 10, **dadurch gekennzeichnet, dass** der Aggregationsvorgang für jede der besagten Vorrichtungen entweder durch einen Mikroprozessor (17) des Parametrierservers des Netzwerks, oder durch jeden Mikroprozessor (35) der Vorrichtungen des Netzwerks ausgeführt wird.

12. Verfahren nach Anspruch 10, **dadurch gekennzeichnet, dass** die Kombination der Konfigurationsmeldungen eine Summe, ein Höchstwert oder eine Verknüpfung ist.

13. Verfahren nach Anspruch 10, **dadurch gekennzeichnet, dass** das Aggregationskriterium in Abhängigkeit von der IP Adresse definiert wird.

14. Verfahren nach Anspruch 10, **dadurch gekennzeichnet, dass** das Aggregationskriterium in Abhängigkeit von der Port-Nummer definiert wird.

15. Verfahren nach Anspruch 10, **dadurch gekennzeichnet, dass** das Aggregationskriterium in Abhängigkeit vom Mobilkundenprofil festgelegt wird.

16. Telematiknetzwerk (10), das durch einen Netzwerkparametrierserver (16) konfiguriert wird, **dadurch gekennzeichnet, dass** der besagte Server einen Mikroprozessor enthält, der in der Lage ist, ein Aktualisierungsverfahren für Netzwerkparameter nach irgendeinem der Ansprüche 1 bis 14 anzuwenden.

## Claims

1. A method for the selective update of network settings (P) and for processing data packets in transmission devices of a telematic
network (10) where the selective update of the network settings is individualised for a given user station (11, 74) according to the following steps of implementation by a configuration server (16) of the network:
- associating, in a configuration memory (30) of the configuration server of the network, at least one parameter to at least one user profile,
- requesting network connection by the user,
- before authorising the connection, assessing (21, 52) an update condition for the network settings, **characterised in that**:
- in the event of a positive assessment:
- determining the network devices (34a, 14a-14e) to be updated according to the update condition,
- generating configuration messages (26, 56) for the devices determined,
- emitting (27, 57) the configuration messages generated,
- receiving (58, 60) and taking into account the messages emitted by the receiving devices.

2. A method according to claim 1, **characterised in that** the update condition is a modification to the user profile in the configuration memory, this modification being performed by a user or administrator of the network.

3. A method according to claim 1, **characterised in that** the update condition is a modification to the user profile in the configuration memory, this modification (67) being executed by the server according to the result of a statistical analysis (29, 66) of a connection history profile of a network user.

4. A method according to claim 3, **characterised in that** it comprises the following steps:
- transferring the connection history profile of the user to a network administrator's computer,
- executing this profile on this computer,
- detecting potential connection anomalies of the user on the network.

5. A method according to claim 1, **characterised in that** the update condition is a modification to the user profile in the configuration memory, this modification being executed by the server according to a change in IP address of the user profile.

6. A method according to claim 1, **characterised in that** the update condition is a time-based schedule (30d) for updating the network settings.

7. A method according to one of claims 1 to 6, **characterised in that** determining the network devices comprises the following steps:
- determining the portion of the configuration memory (30c, 30d) concerned by the update according to the update condition,
- generating a list (30a) of usernames/addresses id_{U} of the users according to the memory portion,
- generating a list (31 a) of addresses id_{S} of the service servers according to the memory portion,
- generating a list (31 b) of addresses id_{D} of the devices to be configured according to the list of usernames/addresses id_{U} of the users and the list of addresses id_{S} of the service servers,
- generating a list (32b) of addresses id_{B} of the units/telephones to be configured according to the list of usernames/addresses id_{U} of the users,
- launching a topography utility (22, 54) capable of determining the devices and units to be updated from among the devices and units generated.

8. A method according to one of claims 1 to 7, **characterised in that** the generation of configuration messages for the devices determined comprises the following steps:
- generating processing parameter messages by the configuration server of the network in a standard message format (55),
- determining the type of syntax (34b) supported by each determined device according to their model,
- for each determined device, translating the standard message by the configuration server of the network into a configuration message according to their syntax.

9. A method according to one of claims 1 to 7, **characterised in that** the generation of configuration messages for the devices determined comprises the following steps:
- emitting processing parameter messages by the configuration server of the network in a standard message format (55) for the determined devices,
- receiving the standard messages by the determined devices,
- each determined device translates a configuration field (24c) of the standard message received into a syntax that can be understood by the processing means of the corresponding device.

10. A method according to one of claims 1 to 9, **characterised in that** it implements an aggregation operation according to the following steps:
- when several configuration messages have a homogeneous, dynamic behaviour in relation to an aggregation criterion, then
- combining the configuration messages into a configuration message macro, this configuration message macro being an assembly of several configuration messages, according to said aggregation criterion.

11. A method according to claim 10, **characterised in that** the aggregation operation is executed either by a microprocessor (17) of the configuration server of the network, or by each microprocessor (35) of the network devices for each of said devices.

12. A method according to claim 10, **characterised in that** the combination of the configuration messages is a sum, a maximum or a logical operator.

13. A method according to claim 10, **characterised in that** the aggregation criterion is defined according to the IP address.

14. A method according to claim 10, **characterised in that** the aggregation criterion is defined according to the port number.

15. A method according to claim 10, **characterised in that** the aggregation criterion is defined according to the profile of the mobile customer.

16. A telematic network (10) configured by a network configuration server (16), **characterised in that** said server comprises a microprocessor capable of implementing a method for updating network settings according to any one of claims 1 to 14.
